Europäisches Patentamt

European Patent Office

Office européen des brevets

(19)

(11) Publication number: **0 304 119**

**A2**

## (12) EUROPEAN PATENT APPLICATION

(21) Application number: **88201701.5**

(22) Date of filing: **09.08.88**

(51) Int. Cl.4: **A23C 19/055 , A23C 19/06**

(30) Priority: **12.08.87 GB 8719087**

(43) Date of publication of application:
**22.02.89 Bulletin 89/08**

(84) Designated Contracting States:
**AT BE CH DE ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(71) Applicant: **UNILEVER PLC**
**Unilever House Blackfriars P.O. Box 68**
**London EC4P 4BQ(GB)**

(84) **GB**

(72) Inventor: **Biernoth, Gerhard**
**Eichenweg 6**
**D-2080 Quickborn(DE)**
Inventor: **Kloosterman, Johannes**
**Utrechtslaan 91**
**NL-3137 RG Vlaardingen(NL)**
Inventor: **Kröber, Dieter Karl-Hermann**
**Adriaan Pauwstraat 2**
**NL-2582 AR The Hague(NL)**
Inventor: **MacNeill, Avril Brown**
**3 Spring Grove**
**Gravesend Kent DA12 1LL(GB)**
Inventor: **Scharmann, Harry**
**2 Mereworth Close Hayesford Park**
**Bromley Kent BR2 9DF(GB)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) Process for preparing semi-hard to hard cheese product and cheese product obtainable by such process.

(57) The present invention is concerned with a process for preparing a semi-hard to hard cheese product containing less than 40% by weight of fat of saturated fatty acid residues, comprising the following steps:

(a) combining a fatty composition with an aqueous composition so as to obtain a filled milk containing from 1.2-40 wt.% of fat, said fat comprising less than 40 wt.%, preferably less than 30 wt.% of saturated fatty acid residues,

(b) adding a starter culture and/or coagulant so as to coagulate the filled milk,

(c) cutting the coagulum to provide curd particules in whey,

(d) separating the whey from the curd.

(e) adding a particulate flavour concentrate obtained by fermentation of cheese or a cheese component,

(f) filling the remaining curd into a mould;

(g) pressing the curd. and

(h) ripening,

The cheese products obtained by the present process have an excellent cheese flavour which is almost indistinguishable from the flavour of similar cheese types, prepared from natural milk.

Yet another aspect of the present invention is a Cheese product, comprising a relatively low amount of saturated fatty acid residues, which product is characterized in that it is obtainable by a process according to the present invention.

# Process for preparing semi-hard to hard cheese product and cheese product obtainable by such process

The present invention is concerned with a process for preparing a semi-hard to hard cheese product containing a relatively low amount of SAturated Fatty Acid residues (so called low-SAFA cheese), said process comprising the addition of a flavour concentrate so as to improve the flavour of the final cheese product, and to a cheese product obtainable by such a process.

The low-SAFA cheese product according to the present invention contains less than 40% by weight of fat of saturated fatty acid residues, as contrasted with normal ripened cheeses which comprise about 65% by weight of fat of saturated fatty acid residues.

A reduction in SAFA-content may be obtained by replacing milk fat by fat rich in unsaturated fatty acid residues, i.e. Mono-Unsaturated Fatty Acid residues (MUFA) or Poly Unsaturated Fatty Acid residues (PUFA). The replacement of milk fat by fat rich in unsaturated fatty acid residues, however, results in a cheese-product having a poor cheese flavour.

Numerous cheese flavour concentrates are commercially available, which concentrates may be incorporated into low-SAFA cheese·products to try to overcome this flavour deficiency. It was found, however, that unsatisfactory results are obtained when using such commercially available cheese flavour compositions.
In order to obtain a good quality low-SAFA cheese product it is necessary that a flavour composition is added which, after the manufacturing process including the ripening period and shelf-life of the product, compensates for the low intensity/and or absence of particular cheese flavour-tones in the low-SAFA cheese.

We have found that a low-SAFA cheese, having an excellent cheese flavour, may be obtained by combining a fatty composition with an aqueous composition so as to obtain a filled milk containing from 1.2-40 wt.% of fat, comprising less than 40% , preferably less than 30% by weight of the fat of saturated fatty acid residues, and adding a particulate flavour concentrate obtained by fermentation of cheese or a cheese component, such as for example curd. Here the flavour concentrate is obtained in its particulate form either by freezing and comminuting the fermented cheese or cheese component, or by drying said fermented composition.

Thus the present invention is concerned with a process for preparing a semi-hard to hard cheese product containing less than 40% by weight of fat of saturated fatty acid residues, comprising the following steps:

(a) combining a fatty composition with an aqueous composition so as to obtain a filled milk containing from 1.2-40 wt.% of fat, said fat comprising less than 40 wt.%, preferably less than 30 wt.% of saturated fatty acid residues,

(b) adding a starter culture and/or coagulant so as to coagulate the filled milk,

(c) cutting the coagulum to provide curd particles in whey,

(d) separating the whey from the curd,

(e) adding a particulate flavour concentrate obtained by fermentation of cheese or a cheese component,

(f) filling the remaining curd into a mould,

(g) pressing the curd, and

(h) ripening.

The cheese products obtained by the present process have an excellent cheese flavour which is almost indistinguishable from the flavour of similar cheese types, prepared from natural milk. Moreover the process according to the present invention offers the advantage that it is relatively simple. As contrasted with, for instance, various commercially obtainable pasty flavour concentrates, the particulate flavour concentrate used in the present process can readily be combined with the other components. Thus it is easy to obtain an even distribution of said concentrate throughout the product without the necessity of subjecting said product to high shear.

By semi-hard to hard cheese products are meant those cheese products which are of a rather firm consistency such as, for example, Gouda, Edam, Emmentaler, Cheddar and Territorial UK Cheeses such as Cheshire and Lancashire. Preferably the present process is used for preparing a cheese of the Gouda, Edam or Cheddar type.

The fatty composition of step (a) of the present process, preferably comprises vegetable oil or a fraction thereof. Said vegetable oil, or part of it, suitably may have been chemically modified, for instance, by means of hydrogenation or interesterification. Examples of suitable vegetable oils are sunflower oil, soybean oil, palm oil, olive oil, corn oil and cottonseed oil. Although the presence of relatively high amounts of unsaturated fatty acid residues in the final product is normally accompanied with a relatively poor flavour quality, the present process enables the preparation of a product containing a relatively high amount of unsaturated fatty acid residues, without a substantial loss of flavour quality. Thus, preferably, the fat present in the filled milk of step (a) has a weight-ratio of unsaturated to saturated fatty acid residues of at least 1.5, more preferably of at least 3.

The filled milk applied in the present process may comprise up to 40 wt.% of fat. Although, according to normal terminology an aqueous composition comprising 40 wt.% of fat would rather be referred to as a filled cream, the term filled milk as used in the application also covers filled creams comprising as much as 40 wt.% of fat. Although the filled milk used in the present process may have been concentrated to the fat and protein content desired in the finished product, preferably the filled milk comprises from 1.2-4.5 wt.% of fat. The coagulant applied in the present process preferably is rennet.

The term fermentation as used throughout the application encompasses fermentation by enzymes as well as microbiological organisms, such as fermentative bacteria. Preferably the particulate flavour concentrate is obtained by enzymatic fermentation.

In case the fatty composition of step (a) is composed of two or more different components, these components may be combined together first and subsequently be combined with the aqueous composition of step (a), or alternatively said components may be combined with the aqueous phase successively. Both procedures are covered by the present application. Likewise the present application also encompasses the subsequent addition to the fatty composition of separate components of the aqueous composition of step (a).

The filled milk used in the present process may contain essentially no milk fat, for example if the aqueous composition of step (a) is tap water, containing ingredients such as milk protein, and the fatty composition is a fat blend of non-dairy origin. Preferably, however, the total fat present in the filled milk comprises less than 40 wt.%, more preferably even less than 25 wt.% milk fat as thus the amount of saturated fatty acid residues in the filled milk may be kept rather low, and moreover a positive flavour contribution is obtained from the remaining milk fat.

In this application the terms fat and oil are used interchangeably, unless indicated otherwise. By both fat and oil is meant an edible substance, which may be solid or liquid at ambient temperature, consisting essentially of triglycerides, or comprising non-toxic material having physical properties similar to triglycerides, which material may be indigestible, such as for example waxes, e.g. jojoba oil and poly fatty acid esters of mono- and disaccharides, e.g. sucrose octa fatty acid ester, or mixture thereof.

By fatty acid residues, whenever referred to in this application, unless indicated otherwise, are meant those fatty acid residues which are digestible, i.e. those fatty acid residues which may be converted to free fatty acid upon digestion. Thus the term fatty acid residues as used in the application, for instance, encompasses fatty acid residues in triglycerides, as well as in mono- and diglycerides, but not fatty acid residues as present in, for example, sucrose octa fatty acid ester.

The aqueous composition of step (a), although it may be of non-dairy origin, is preferably a dairy composition of low fat content such as skim milk. In order to obtain a cheese product having a very favourable texture, the filled milk of step (a) should comprise milk protein and fat in a weight ratio in the range of 0.5:1 to 1.5:1.

Although the aqueous and fatty composition of step (a) may, for example, be mixed together by stirring at relatively high speed, or by combining both compositions and passing it through a static mixer or a pressure valve, it is preferred to inject one composition into the other at a pressure difference of at least 60 atmospheres, more preferably of at least 120 atmospheres.

In accord with the present invention, the particulate cheese flavour concentrate obtained via fermentation of cheese or a cheese component, may effectively be added at any stage of the process as long as such is done before pressing the curd. We have found, however, that flavouring is most effective if the particulate concentrate is added to the curd after most of the whey has been separated. Therefore, in a preferred embodiment of the present invention, the particulate flavour concentrate is added to the curd after most of the whey is separated. If the concentrate is added after most of the whey is separated off, relatively small amounts of concentrate suffice to give the cheese product an excellent cheese flavour. Preferably the particulate flavour concentrate is added at a concentration level in the range of from 0.1-2.5 wt.%, more preferably 0.3-1.5 wt.%.

Since fermentation of cheese or cheese components is normally carried out in an aqueous medium, in order to obtain a particulate concentrate by drying, it is necessary to remove a substantial amount of water. Suitable techniques for drying the fermented product are spray drying, freeze drying and roller drying. Preferably the fermented product is spray dried to a water content of less than 20 wt.%, more preferably of less than 10 wt.%.

Preferably the fermented cheese or cheese component employed in the present process is dried by means of spray drying. Since conditions as normally applied in spray drying may lead to flavour losses, it is preferred to apply relatively mild conditions so as to reduce flavour losses, in particular flavour losses of less volatile cheese flavour compounds. Thus, preferably, the spray drying of the fermented product is carried out in a spray drier, suitably provided with an integrated fluid bed, the inlet temperature of the drying gas being in the range of 120 C to 260 C and the outlet temperature of the drying gas being less than 110 C. Preferably the inlet temperature of the drying gas is in the range of 130-200 C and the outlet temperature in the range of 20-100 C.

Although spray drying of the fermented cheese or cheese component may easily result in the loss of the more volatile flavour compounds we have surprisingly found that such flavour losses do not significantly affect the quality of the flavour of the final product. It is believed that in the process according to the invention, during ripening, substantial amounts of relatively volatile cheese flavour compounds are formed.

The particulate flavour concentrate of step (e) of the present process may also be obtained by freezing and comminuting the aqueous paste obtained after fermentation of the cheese or cheese component. The fermented composition may suitably be frozen by the admixture of dry ice during grinding operation. Although the combination of freezing and grinding yields particulate flavour concentrates which are easy dosable, preferably, the particulate flavour concentrate of the present invention is a dry flavour concentrate.

The concentrate used in the present process preferably is obtained by fermentation of a semi-hard to hard cheese, as thus the concentrate obtained will impart the desired flavour nctes of semi-hard to hard cheese to the low SAFA cheese product obtained by the present process. Most preferably the present concentrate is obtained by fermentation of cheese of similar type as the cheese product in which said concentrate is to be incorporated.

Although various enzymes or microorganisms may be used in a fermentation process to convert cheese or cheese components into a flavour concentrate, preferably the enzymes or microorganisms used exhibit proteolytic, lipolytic and/or peptidolytic activity.

In particular if the filled milk used in the present process comprises only a limited amount of milk fat, we have found it advantageous to add a butter flavour concentrate to either the aqueous or fatty composition of step (a), or to the filled milk before coagulation. Preferably the butter flavour concentrate originates from a dairy product such as cream or butter and is extracted therefrom by means of techniques known in the art. We have found that such butter flavour concentrates when used in combination with the particulate flavour concentrate obtained by fermentation of cheese or a cheese component, after the ripening stage, yield a product having an excellent cheese flavour.

Yet another aspect of the present process is a cheese product, comprising a relatively low amount of saturated fatty acid residues, which product is characterized in that it is obtainable by a process according to the present invention.

The invention is illustrated by means of the following examples;

## Example 1

A Cheddar cheese product of low SAFA content was prepared following the procedure described below.

A fat blend consisting of a mixture of 20 parts by weight of soybean oil, hardened under isomerizing conditions to a melting point of 45 C, and 80 parts by weight of sunflower oil was heated to 55 C and mixed with 0.4 wt.% lecithin, 0.04 wt.% Butter Base 100 $^R$ (ex. Butter Buds Div. of Cumberland Packing Co., Racine, U.S.A.) and 0.2 wt.% alpha-tocopherol.

The oil phase was injected under a pressure of 230-240 bar into a stream of skim milk (pasteurized at 72 C / 15 seconds) at 45 C under a back pressure of 1.5 bar. The resulting filled milk had a fat content of about 10 wt.%. The fat content was raised to 10.5 wt.% by adding a dairy cream comprising 40 wt.% fat. Subsequently the fat content of the filled milk was adjusted to a fat content of 3.9 wt.% by the addition of skim milk.

To the filled milk so obtained 0.02 wt.% CaCl$_2$ and 0.03 wt.% beta-carotene (20% aqueous dispersion) was added. The vat milk was inoculated with 1 wt.% starter culture (Ezal.1$^R$, ex Eurozyme, Paris, France), comprising Streptococcus lactis and cremoris (inoculated twice before usage), warmed up to 31 C and held at this temperature for 60 minutes (acid degree ca. 16 D). Subsequently 0.03 wt.% liquid calf-rennet (strength 1:10,000) was added. After ca. 30 min. the vat milk had coagulated and was cut. The curd was stirred for 20 min. and then scalded at 41 C after which the whey was drained off the curd was formed into slabs which were piled up and turned every 10 min until a pH of 5.2 was reached. Then the slabs were comminuted and the curd particules thus obtained were mixed with salt (3 wt.%) and a particulate cheese flavour concentrate (1 wt.%) obtained by spray drying a fermented Cheddar cheese flavour concentrate commercially available under the Tradename EMC 245 BY Cremo Cheese Company A/S, Denmark.

The EMC 245 paste was dried by means of a spray drier containing an integrated fluidized bed. The inlet temperature of the drying gas (air) employed was about 200 C and the outlet temperature of the gas was about 90 C. The dried particulate cheese flavour concentrate had a moisture content of 3 wt.%.

Subsequently the flavoured curd particules were filled in perforated moulds and pressed for 16 h with 5 bar. The moulds were emptied and the cheese loaves packaged in shrink film after which the film was sealed and shrunk. The packaged cheese loaves were put into plastic boxes and transported to a ripening room and left there to ripen at 9 C till 80% relative humidity (for a minimum of 3 months).

The cheese product obtained after three months was evaluated by an expert panel and was judged to have an excellent cheese flavour and texture.

Example 2-4

Example 1 was repeated with the exception that milkfat was introduced in the filled milk by the addition of an appropriate amount of whole milk comprising 3.5 wt.% fat and by adaption of the amount of skim milk added. The low-SAFA Cheddar cheese thus obtained was of a quality equal to the cheese product of Example 1.

Cheese products of a quality comparable to the products of Examples 1 and 2 were obtained when the milkfat content of the filled milk of Example 1 was increased from 6 wt.% of the total fat to 25 wt.% or when the soybean oil hardened to 45 C was replaced by other hardstocks commonly used in the preparation of low-SAFA margarines.

Example 5

Example 1 was repeated with the exception that the particulate cheese flavour concentrate was obtained by freezing a EMC 245 cheese flavour paste overnight at a temperature of -20 C. The frozen paste was comminuted in a cutter to a powder under the addition of some dry ice to compensate for the developing heat and was stored at -20 C till usage.

The product thus obtained was of a quality comparable to the cheese product of example 1. The use of frozen comminuted cheese flavour paste, however, turned out to be less convenient than the use of spray dried paste, in particular because, if no additional measures are taken, the frozen particulate concentrate should be added in a deep frozen state, and distributed through the product before getting the chance of clotting together.

Claims

1. Process for preparing a semi-hard to hard cheese product containing less than 40% by weight of fat of saturated fatty acid residues, comprising the following steps:
(a) combining a fatty composition with an aqueous composition so as to obtain a filled milk containing from 1.2-40 wt.% fat, said fat comprising less than 40 wt.%, preferably less than 30 wt.% of saturated fatty acid residues,
(b) adding a started culture and/or coagulant so as to coagulate the filled milk,
(c) cutting the coagulum to provide curd particles in whey,
(d) separating the whey from the curd,
(e) adding a particulate flavour concentrate obtained by fermentation of cheese or a cheese component,
(f) filling the remaining curd into a mould,
(g) pressing the curd, and
(h) ripening.

2. Process according to claim 1, wherein the particulate flavour concentrate is added to the curd after most of the whey is separated.

3. Process according to claim 1 or 2, wherein the particulate flavour concentrate comprises less than 20 wt.% water.

4. Process according to claim 3, wherein the particulate flavour concentrate is obtained by spray drying the fermented cheese or cheese component.

5. Process according to claim 1 or 2, wherein the particulate flavour concentrate is obtained by freezing and comminuting the fermented cheese or cheese component.

6. Process according to any one of claims 1-5, wherein the aqueous composition is of dairy origin.

7. Process according to any one of claims 1-6, wherein the total fat present in the filled milk comprises less than 40% by weight of milk fat.

8. Process according to any one of claims 1-7, wherein the filled milk comprises milk protein and fat in a weight ratio in the range of 0.5:1 to 1.5:1.

9. Process according to any of claims 1-8, wherein the fatty composition and the aqueous composition are combined together by injecting one compostion into the other at a pressure difference of at least 60 atmospheres.

10. Process according to any one of claims 1-9, wherein the particulate flavour concentrate is added at a concentration level in the range of from 0.1-2.5 wt.%.

11. Process according to any one of claims 1-10, wherein the particulate flavour concentrate is obtained by fermentation using enzymes or microorganisms exhibiting proteolytic, lipolytic and/or peptidolytic activity.

12. Process according to any one of claims 1-11, wherein a butter flavour concentrate is added to the filled milk before coagulation.

13. Cheese product, comprising a relatively low amount of saturated fatty acid residues, which product is characterized in that it is obtainable by a process according to any one of claims 1-12.